(19) Europäisches Patentamt / European Patent Office / Office européen des brevets

(11) **EP 1 682 923 B1**

(12) **FASCICULE DE BREVET EUROPEEN**

(45) Date de publication et mention de la délivrance du brevet:
**05.12.2012 Bulletin 2012/49**

(21) Numéro de dépôt: **04818145.7**

(22) Date de dépôt: **29.10.2004**

(51) Int Cl.:
*G01S 13/93* (2006.01)  *G01S 5/02* (2010.01)
*G01S 3/74* (2006.01)  *G01S 3/80* (2006.01)
*G01S 3/46* (2006.01)

(86) Numéro de dépôt international:
**PCT/EP2004/052736**

(87) Numéro de publication internationale:
**WO 2005/045467 (19.05.2005 Gazette 2005/20)**

(54) **PROCEDE DE LOCALISATION D UN OU DE PLUSIEURS EMETTEURS**

VERFAHREN ZUM LOKALISIEREN MINDESTENS EINES EMITTERS

METHOD FOR LOCALISING AT LEAST ONE EMITTER

(84) Etats contractants désignés:
**AT BE BG CH CY CZ DE DK EE ES FI FR GB GR HU IE IT LI LU MC NL PL PT RO SE SI SK TR**

(30) Priorité: **07.11.2003 FR 0313128**
**14.05.2004 FR 0405254**

(43) Date de publication de la demande:
**26.07.2006 Bulletin 2006/30**

(73) Titulaire: **Thales**
**92200 Neuilly Sur Seine (FR)**

(72) Inventeurs:
• **FERREOL, Anne,**
**THALES**
**F-94117 CX Arcueil (FR)**
• **HEURGUIER, Dominique,**
**THALES**
**F-94117 CX Arcueil (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **COMON P: "INDEPENDENT COMPONENT ANALYSIS, A NEW CONCEPT?" SIGNAL PROCESSING, ELSEVIER SCIENCE PUBLISHERS B.V. AMSTERDAM, NL, vol. 36, no. 3, 1 avril 1994 (1994-04-01), pages 287-314, XP000435669 ISSN: 0165-1684**
• **WAX M ET AL: "Direction finding of coherent signals via spatial smoothing for uniform circular arrays" IEEE TRANSACTIONS ON ANTENNAS AND PROPAGATION, IEEE SERVICE CENTER, PISCATAWAY, NJ, US, vol. 42, no. 5, mai 1994 (1994-05), pages 613-620, XP002170562 ISSN: 0018-926X**
• **WAX M ET AL: "DETECTION AND LOCALIZATION IN COLORED NOISE VIA GENERALIZED LEAST SQUARES" IEEE TRANSACTIONS ON SIGNAL PROCESSING, IEEE SERVICE CENTER, NEW YORK, NY, US, vol. 44, no. 7, 1 juillet 1996 (1996-07-01), pages 1734-1743, XP000621224 ISSN: 1053-587X**
• **SHEINVALD J ET AL: "Localization of multiple sources with moving arrays" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 avril 1997 (1997-04-21), pages 3521-3524, XP010226559 ISBN: 0-8186-7919-0**

EP 1 682 923 B1

## Description

L'invention concerne un procédé de localisation d'un ou de plusieurs émetteurs.

Il s'applique notamment à la localisation d'émetteurs au sol à partir d'un engin mobile sans avoir de connaissance a priori sur les signaux émis.

Le domaine technique est notamment celui de la localisation passive d'émetteurs.

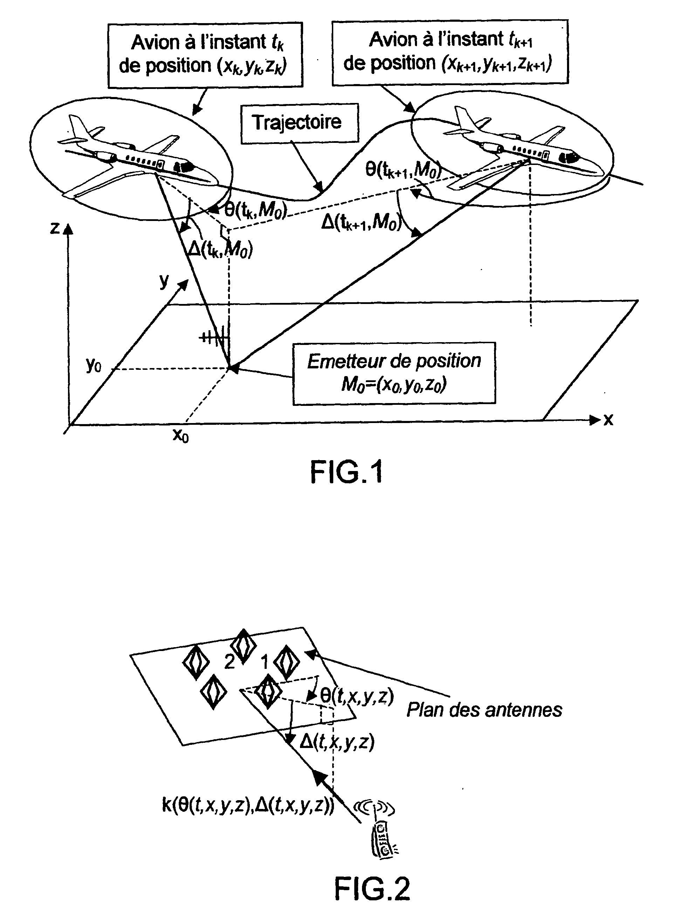

La figure 1 illustre une localisation aéroportée. L'émetteur est à la position $(x_0, y_0, z_0)$. Le porteur à l'instant $t_k$ est à la position $(x_k, y_k, z_k)$ et voit l'émetteur sous l'incidence $(\theta(t_k x_0, y_0, z_0), \Delta(t_k, x_0, y_0, z_0))$. Les angles $\theta(t, x_0, y_0, z_0)$ et $\Delta(t, x_0, y_0, z_0)$ évoluent au cours du temps et dépendent de la position de l'émetteur ainsi que de la trajectoire du porteur.

Les angles $\theta(t, x_0, y_0, z_0)$ et $\Delta(t, x_0, y_0, z_0)$ sont repérés par rapport à un réseau de $N$ antennes pouvant être fixé sous le porteur comme le montre la figure 2.

Il existe actuellement plusieurs techniques permettant de déterminer la position $(x_m, y_m, z_m)$ d'un émetteur. Ces techniques de localisation diffèrent notamment par les paramètres qui sont estimés en instantanée au niveau du réseau des capteurs. Elles peuvent être classées de la manière suivante:

### Utilisation de la goniométrie,

Ces techniques sont connues et utilisées dans l'art antérieur. Dans la plupart des cas, elles sont basées sur une goniométrie 1 D en azimut. Les azimuts $\theta_{km} = \theta(t_k, x_m, y_m, z_m)$ associés au $m$ième émetteur sont mesurés pour différents instants $t_k$. En utilisant la position $(x_k, y_k, z_k)$ du porteur à l'instant correspondant k, une position $(x_{mk}, y_{mk}, z_{mk})$ de l'émetteur m est estimée par une intersection sol. La position $(x_k, y_k, z_k)$ du porteur est donnée par un GPS, son orientation est obtenue par un compas dans le cas d'un porteur terrestre et par une centrale de navigation dans le cas d'un aéronef. A partir de toutes les positions $(x_{mk}, y_{mk}, z_{mk})$, la méthode effectue une extraction de données permettant de déterminer les $M$ positions dominantes $(x_m, y_m, z_m)$ des émetteurs incidents. La localisation est obtenue par triangulation ou par intersection sol (goniométrie 2D). L'inconvénient des techniques de triangulation est qu'elles nécessitent un défilement important. D'autre part, les techniques de goniométrie doivent utiliser un réseau de capteurs non ambiguë pour fournir les incidences. Ceci a pour inconvénient de nécessiter une table de calibration et de limiter la taille du réseau de capteurs et par conséquent de fournir des incidences limitées en précision.

### Utilisation de la différence de phase entre 2 capteurs éloignés,

La différence de phase $\Delta\varphi(t_k, x_0, y_0, z_0)$ entre capteurs dépend de la positions des 2 capteurs ainsi que de l'incidence $(\theta(t_k x_0, y_0, z_0), \Delta(t_k, x_0, y_0, z_0))$ de l'émetteur. Cette phase qui dépend du temps est directement liée à la position $(x_0, y_0, z_0)$ de l'émetteur. En conséquence, en étudiant la fonction du temps $\Delta\varphi(t, x_0, y_0, z_0)$ il est possible d'en déduire la position $(x_0, y_0, z_0)$ de l'émetteur. Dans cette famille d'application les 2 capteurs sont éloignés pour augmenter la précision de la mesure de la phase. Ceci a pour inconvénient de faire varier la différence de phase $\Delta\varphi(t, x_0, y_0, z_0)$ en fonction du temps sur plus de $2\pi$ et la technique nécessite alors une étape permettant de dérouler la phase sur plus de $2\pi$. D'autre part dans cette technique la phase est mesurée en effectuant directement une intercorrélation entre 2 capteurs ce qui ne permet pas de traiter le cas multi-émetteurs.

### Utilisation de la mesure de la fréquence porteuse de l'émetteur,

Ces techniques exploitent le fait que la fréquence porteuse estimée est la somme de la fréquence porteuse de l'émetteur et du décalage doppler du à la vitesse de déplacement du porteur. Le décalage doppler a l'avantage de dépendre de la position $(x_0, y_0, z_0)$ de l'émetteur et d'être aussi une fonction du temps $\Delta f(t, x_0, y_0, z_0)$. En conséquence en étudiant la fonction du temps $\Delta f(t, x_0, y_0, z_0)$ il est possible d'en déduire la position $(x_0, y_0, z_0)$ de l'émetteur. La mesure de ce décalage doppler présente toutefois comme inconvénient de nécessiter des émetteurs ayant des formes d'ondes particulières. Cette mesure de fréquence peut se faire par des techniques cycliques supposant que le signal émis est non circulaire.

### Utilisation des temps de propagation,

Ces techniques exploitent les différences de temps de propagation entre aériens (TDOA ou Time difference of arrival) qui sont directement liées aux distances respectives de l'émetteur aux différents aériens et donc à la position $(x_0, y_0, z_0)$ de l'émetteur. En utilisant au moins trois aériens suffisamment espacés, il est possible de déduire la position $(x_0, y_0, z_0)$ de l'émetteur par localisation hyperbolique. L'inconvénient de ces techniques est qu'elles ne peuvent être mises en oeuvre en contexte mono porteur en raison des espacements considérables requis entre aériens. D'autre part dans ces techniques, la différence de temps est mesurée en effectuant directement une intercorrélation entre 2 capteurs,

ce qui ne permet pas de traiter le cas multi-émetteurs.

Le document "localization of multiple sources with moving arrays" de Sheinvald décrit deux estimateurs permettant de trouver les directions d'arrivée dans un réseau de capteurs mobile.

Le procédé selon l'invention repose notamment sur une nouvelle approche d'estimation directe des positions $(x_m, y_m, z_m)$ de chacun des émetteurs à partir d'une analyse paramétrique du signal multi-voies à divers instants $t_k$ sur une durée Dt. L'analyse paramétrique a notamment pour fonction supplémentaire de séparer les différents émetteurs à chaque instant $t_k$. On associe ensuite les paramètres d'un même émetteur issus des différents instants $t_k$ pour finalement localiser chacun des émetteurs.

L'invention concerne un procédé de localisation d'une ou de plusieurs sources, la ou lesdites sources étant en mouvement par rapport à un réseau de capteurs, le procédé comportant une étape de séparation des sources afin d'identifier les vecteurs directeurs associés à la réponse des capteurs à une source d'incidence donnée les angles d'incidence étant variables et dépendent de la position du réseau de capteurs et des desdites sources, comprenant les étapes suivantes :

- associer les vecteurs directeurs $\mathbf{a}_{1m}...\mathbf{a}_{Km}$ du $m^{ième}$ émetteur obtenus respectivement aux instants $t_1...t_K$, sur une durée Dt afin de séparer les différents émetteurs à chaque instant $t_K$,
- localiser la position $(x_m, y_m, z_m)$ du $m^{ième}$ émetteur à partir des vecteurs $\mathbf{a}_{1m}...\mathbf{a}_{Km}$ associés à un même émetteur et issus des différents instants $t_K$.

Le procédé est caractérisé en ce que l'étape de localisation comporte au moins les étapes suivantes :

maximiser un critère de corrélation vectorielle normalisé $L_k(x, y, z)$ dans l'espace $(x, y, z)$ de position d'un émetteur avec

$$L_K(x,y,z)=\frac{\left|\mathbf{b}_K{}^H \mathbf{v}_K(x,y,z)\right|^2}{\left(\mathbf{b}_K{}^H \mathbf{b}_K\right)\left(\mathbf{v}_K(x,y,z)^H \mathbf{v}_K(x,y,z)\right)}$$

Avec

$$\mathbf{b}_K = \begin{bmatrix} \mathbf{b}_{1m} \\ \vdots \\ \mathbf{b}_{Km} \end{bmatrix} = \mathbf{v}_K(x_m, y_m, z_m) + \mathbf{w}_K \quad , \quad \mathbf{v}_K(x,y,z) = \begin{bmatrix} \mathbf{b}(t_1, x, y, z) \\ \vdots \\ \mathbf{b}(t_K, x, y, z) \end{bmatrix}$$

et

$$\mathbf{w}_K = \begin{bmatrix} \mathbf{w}_{1m} \\ \vdots \\ \mathbf{w}_{Km} \end{bmatrix}$$

où $\mathbf{w}_k$ est le vecteur bruit pour toutes les positions $(x, y, z)$ d'un émetteur.

Le procédé selon l'invention présente notamment les avantages suivants :

- il permet de localiser en plus de la position en $(x, y, z)$ d'un émetteur son vecteur vitesse,
- il s'applique lorsque l'on est en présence de un ou plusieurs émetteurs incidents,
- sa mise en oeuvre ne nécessite pas de connaissances particulières sur le signal émis,
- il permet d'utiliser un réseau de capteurs ambiguë c'est-à-dire plusieurs incidences sont associées à la même réponse du réseau qui ont l'avantage d'être grand et ainsi d'être plus robuste aux phénomènes de couplage entre aériens ou plus généralement aux erreurs de modélisation du réseau d'aériens,

- il peut être mis en oeuvre sur des réseaux calibrés en $(\theta,\Delta)$.
- il peut être mis en oeuvre sur des réseaux à antennes à diversités d'amplitude comme les antennes colocalisées : réseau avec des dipôles de même centre de phase et ayant des orientations différentes.

D'autres caractéristiques et avantages de l'objet de la présente invention apparaîtront mieux à la lecture de la description qui suit donnée à titre illustratif et nullement limitatif à la lecture des figures annexées qui représentent :

- la figure 1 le schéma de principe de la localisation d'un émetteur de position au sol au moyen d'un aéronef,
- la figure 2 la relation entre un réseau d'antennes et l'incidence d'un émetteur,
- la figure 3 un schéma général expliquant le fonctionnement du procédé selon l'invention,
- les figures 4, 5 et 6 des exemples de mise en oeuvre du procédé selon l'invention.

Afin de mieux faire comprendre l'objet de la présente invention, la description qui suit est donnée à titre illustratif et nullement limitatif pour localiser plusieurs émetteurs disposés au sol au moyen d'un réseau de capteurs équipant un aéronef en mouvement. Un tel système est par exemple décrit à la figure 1. L'aéronef est équipé d'un processeur adapté à mettre en oeuvre les étapes du procédé selon l'invention.

Le procédé peut aussi être mis en oeuvre dans le cadre de véhicule en mouvement au sol.

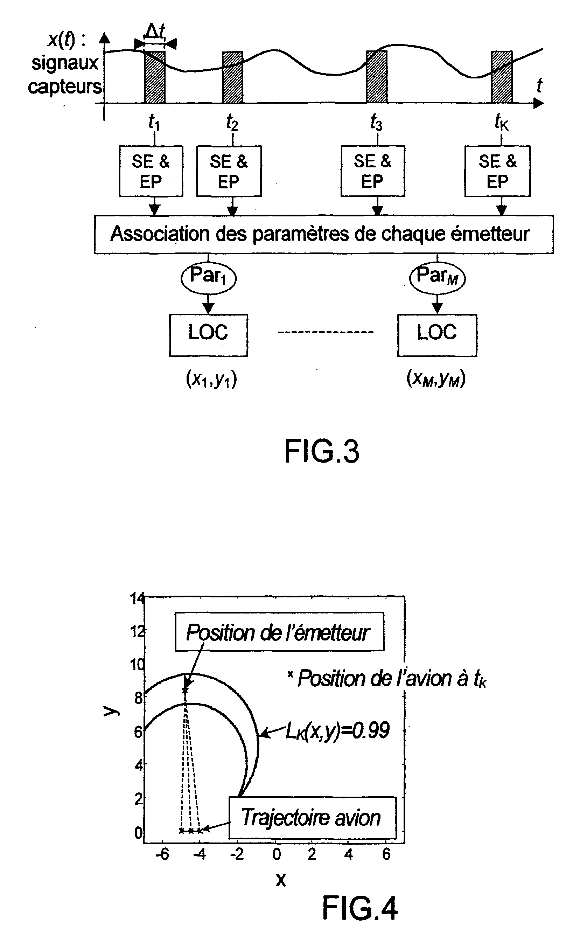

La figure 3 représente, dans un diagramme temps-amplitude du signal, le signal x(t) composé d'une combinaison des signaux des émetteurs à différents instants $t_1$, $t_2$, ...$t_K$. Sur cette figure les différentes étapes mises en oeuvre à savoir la séparation des émetteurs SE et l'estimation paramétrique EP, l'association des paramètres de chaque émetteur, la localisation d'un émetteur sont résumées.

En présence de $M$ émetteurs, le procédé dispose, à l'instant $t$ en sortie des $N$ capteurs du réseau, du vecteur $\mathbf{x}(t)$ représentatif du mélange des signaux des $M$ émetteurs. Autour de l'instant $t_k$, le vecteur $\mathbf{x}(t+t_k)$ de dimension $N$x1, représentant le mélange des signaux des $M$ émetteurs, s'exprime de la manière suivante :

$$\mathbf{x}(t+t_k) = \sum_{m=1}^{M} \mathbf{a}(\theta_{km},\ \Delta_{km})\ s_m(t+t_k) + \mathbf{b}(t+t_k) = \mathbf{A}_k\ \mathbf{s}(t+t_k) + \mathbf{b}(t+t_k) \quad \text{pour} \ |t| < \Delta t/2 \qquad (1)$$

où $\mathbf{b}(t)$ est le vecteur bruit supposé gaussien, $\mathbf{a}(\theta,\Delta)$ est la réponse du réseau de capteurs à une source d'incidence $(\theta, \Delta)$, $\mathbf{A}_k = [\mathbf{a}(\theta_{k1},\ \Delta_{k1})...\ \mathbf{a}(\theta_{kM},\ \Delta_{kM})]$, $\mathbf{s}(t) = [S_1(t)...S_M(t)]^T$, $\theta_{km} = \theta(t_k, x_m, y_m, z_m)$ et $\Delta_{km} = d(t_k, x_m, y_m, z_m)$. Dans ce modèle la matrice $\mathbf{A}_k$ de mélange dépend de l'instant $t_k$ d'observation.

Le vecteur directeur de l'incidence correspondant au $m^{\text{ième}}$ émetteur à l'instant $t_k$ ·

$$\mathbf{a}_{km} = \mathbf{a}(\theta_{km},\ \Delta_{km}) = \mathbf{a}(t_k, x_m, y_m, z_m) \ \text{du} \ m^{\text{ième}} \ \text{émetteur} \qquad (2)$$

est une fonction connue de $t_k$ et de la position de l'émetteur $(x_m, y_m, z_m)$.

Le procédé selon l'invention comporte au moins les étapes suivantes :

1. estimer un ou plusieurs paramètres associés à la position de la source, par exemple les vecteurs directeurs, les incidences, la position, etc. et séparer les $M$ émetteurs pour les différents instants $t_k$, ce qui consiste à identifier les vecteurs directeurs d'incidence $\mathbf{a}_{km}$ pour $(1 \leq m \leq M)$. Cette première étape est par exemple effectuée par des techniques de séparation de sources connues de l'Homme du métier,

2. associer les paramètres estimés pour le $m^{\text{ième}}$ émetteur, par exemple en associant les différents vecteurs directeurs d'incidences, $\mathbf{a}_{1m}$ ......$\mathbf{a}_{km}$ obtenus respectivement aux instants $t_1,...t_k$,

3. localiser le $m^{\text{ième}}$ émetteur à partir des vecteurs associés.

**Etape d'association**

En présence de $M$ émetteurs et après séparation de sources, le procédé possède à l'instant $t_k$ les $M$ signatures $\mathbf{a}_{km}$ pour $(1 \leq m \leq M)$. A l'instant $t_{k+1}$ la séparation de source donne les $M$ vecteurs $\mathbf{b}_i$ pour $(1 \leq i \leq M)$. L'objectif de ce suivi est de déterminer pour le $m^{\text{ième}}$ émetteur, l'indice $i(m)$ qui minimise l'écart entre $\mathbf{a}_{km}$ et $\mathbf{b}_{i(m)}$. Dans ce cas on en déduira que $a_{k+1,\ m} = \mathbf{b}_{i(m)}$. Pour effectuer cette association on définit par exemple la distance entre deux vecteurs **u** et **v** par :

$$d(\boldsymbol{u},\ \boldsymbol{v})\ =\ 1-\frac{\left|u^{\mathrm{H}}v\right|^2}{\left(u^{\mathrm{H}}u\right)\left(v^{\mathrm{H}}v\right)} \tag{3}$$

Où $u^{\mathrm{H}}$ est le transposé conjugué du vecteur u.

Dans ces conditions l'indice $i(m)$ vérifie :

$$d(\mathbf{a}_{km},\ \boldsymbol{b}_{i(m)})\ =\ \min_{1\leq i\leq M}[d(\mathbf{a}_{km},\ \boldsymbol{b}_i)] \tag{4}$$

donc

$$d(\mathbf{a}_{km},\ \boldsymbol{b}_{i(m)})\ =\ \min_{1\leq i\leq M}[1-\frac{\left|a_{km}^{\mathrm{H}}b_{i(m)}\right|^2}{\left(a_{km}^{\mathrm{H}}a_{km}\right)\left(b_{i(m)}^{\mathrm{H}}b_{i(m)}\right)}]$$

Dans cette association on considère une fonction $\beta_m$ associée au $m^{\text{ième}}$ émetteur:

$$\beta_m(t_k)\ =\ d(\mathbf{a}_{km},\ \mathbf{a}_{0m}) \tag{5}$$

Au fil de l'association on obtient pour chaque émetteur m et pour $1\leq m\leq M$, la fonction $\beta_m(t)$. Cette fonction a notamment pour objectif d'éliminer les instants $t_k$ dont la valeur $\beta_m(t_k)$ paraît trop éloignée d'une interpolation de la fonction $\beta_m(t)$, c'est-à-dire que l'on élimine les instants aberrants qui peuvent être associés à d'autres émetteurs. On définit une zone de tolérance $+/-\Delta$ autour de la courbe définie par la fonction $\beta_m(t_k)$. Cette zone de tolérance dépendra de la précision d'estimation des vecteurs directeurs $\mathbf{a}_{km}$. En particulier en présence de M=1 source la zone sera de l'ordre de

$\Delta=3/\sqrt{B\Delta t}$ (où $\Delta t$ est le temps élémentaire d'estimation paramétrique illustré fig.3 et B est la bande instantanée du signal $\boldsymbol{x}(t)$.

Les étapes de cette association pour $K$ instants $t_k$ sont par exemple les suivantes :

> **Etape ASE - 1** : Initialisation du processus à k=2. Le nombre $M$ d'émetteurs initial est par exemple déterminé par un test de détection du nombre de sources à l'instant $t_0$ connu de l'Homme du métier,
> **Etape ASE - 2** : Pour $1\leq m\leq M$ détermination des indices $i(m)$ en appliquant l'équation (4) et en utilisant le vecteur $\mathbf{a}_{k,m}$ avec $1\leq m\leq M$ et les vecteurs $\mathbf{b}_i$ identifiés à l'instant $t_{k+1}$ pour ($1\leq i\leq M$),
> **Etape ASE - 3** : Pour $1\leq m\leq M$ effectuer l'opération $a_{k+1\ m} = \mathbf{b}_{i(m)}$,
> **Etape ASE - 4** : Incrémentation $k\leftarrow k+1$ et si $k<K$ retour à l'étape ASE-1,
> **Etape ASE - 5** : A partir de la famille d'instants $<T>=\{t_1<...< t_K\}$, éliminer les $I$ instants $t_i\in\Phi$ tel que les coefficients $\beta_m(t_i)$ n'appartiennent pas à la zone délimitée par la courbe d'interpolation des $\beta_m(t_k)$ et la zone de tolérance $\Delta$. On éliminera aussi les instants $t_k$ où $|\beta_m(t_k)-\beta_m(t_{k-1})|<\Delta$. Après ce tri la nouvelle famille d'instants est $\Phi=\{t_1<...< t_I\}$ et on pose $K=I$.

A la fin de ces étapes, le procédé a déterminé les vecteurs $\mathbf{a}_{1m}$ ..... $\mathbf{a}_{Km}$ associés au $m^{\text{ième}}$ émetteur.

**Localisation d'un émetteur**

Le procédé détermine la position du $m$ième émetteur à partir des composantes des vecteurs $\mathbf{a}_{1m}$ jusqu'à $\mathbf{a}_{Km}$. Ces vecteurs $\mathbf{a}_{km}$ ont la particularité de dépendre de l'instant $t_k$ et surtout de la position $(x_m, y_m, z_m)$ de l'émetteur. En particulier pour un réseau composé de $N=2$ capteurs espacés d'une distance de $d$ dans l'axe du porteur le vecteur vérifie $\mathbf{a}_{km}$:

$$\mathbf{a}_{km} = \begin{bmatrix} 1 \\ \exp\left( j2\pi \frac{d}{\lambda} \cos(\theta(t_k, x_m, y_m, z_m)) \cos(\Delta(t_k, x_m, y_m, z_m)) \right) \end{bmatrix} = \mathbf{a}(t_k, x_m, y_m, z_m) \qquad (6)$$

La valeur 1 de la première composante correspond au capteur de référence. D'après la figure 1, l'incidence $(\theta(t_k, x_m, y_m, z_m), \Delta(t_k, x_m, y_m, z_m))$ peut être directement calculée à partir de la position $(x_k, y_k, z_k)$ du porteur à l'instant $t_k$ et la position $(x_m, y_m, z_m)$ de l'émetteur.

Etape de transformation du vecteur

Selon une première variante de réalisation, le procédé comporte une étape de correction des $\mathbf{a}_{km}$, la mesure des vecteurs directeurs $\mathbf{a}_{km}$ est généralement obtenue à un facteur complexe près indéterminé. Selon cette première variante, le procédé comporte une étape qui consiste à changer la référence de phase du vecteur directeur mesuré en se ramenant au barycentre de phase (défini à un coefficient scalaire constant près que l'on peut fixer à 1). Cette opération est réalisée, par exemple, en estimant le coefficient de correction déterminé par la transformation suivante des $\mathbf{a}_{km}$ en $\mathbf{a}'_{km}$:

$$a'_{km} = \left( \prod_i \frac{a_i}{|a_i|} \right)^{-\frac{1}{N}} a_{km} \qquad (7)$$

Le coefficient de correction n'est pas totalement déterminé par cette expression compte tenu de l'indétermination d'ordre N de la racine complexe. Un suivi de l'évolution de phase pendant la période d'observation est donc effectué.

Le coefficient complexe étant défini à un facteur près parmi les N racines $N$ième de l'unité, le suivi de phase consiste à fixer arbitrairement le premier coefficient de correction (en prenant la racine 1 par exemple), puis à déterminer à chaque nouvelle itération k+1, le coefficient qui minimise les écarts de phases moyens entre le vecteur directeur recentré à k+1 et le vecteur recentré à l'instant k.

Le critère de minimisation, pour des mesures à la même fréquence, peut être égal à :

$$\min_{\rho \in \sqrt[N]{1}} \sum_{i \in \text{voie}} \min\left( \text{mod}\left( \left| \arg\left( \frac{\rho . a_{k+1}(i)}{a_k(i)} \right) \right|, 2\pi \right), 2\pi - \text{mod}\left( \left| \arg\left( \frac{\rho . a_{k+1}(i)}{a_k(i)} \right) \right|, 2\pi \right) \right) \qquad (8)$$

où les $a_{k+1}$ sont les vecteurs directeur recentrés avec le coefficient de correction déterminé arbitrairement par l'une quelconque des racines Nèmes de l'expression. Pour des mesure à des fréquences différences, il est possible de comparer les phases des composantes des deux vecteurs directeurs en les corrigeant d'une puissance donnée par le rapport de ces deux fréquences.

Si l'on considère les vecteurs $\mathbf{b}_{km} = \mathbf{a}'_{km}$, il est alors possible de comparer cette mesure à la valeur théorique $b(t_k, x_m, y_m, z_m)$ pour laquelle le vecteur directeur théorique $a(t_k, x_m, y_m, z_m)$ est calculé pour une origine considérée au barycentre (géométrique) théorique de phase (lieu géométrique pour lequel la somme théorique des différences de phase s'annule). Ce lieu ne coïncide pas (en général) avec le centre de phase du réseau.

Selon une autre variante de réalisation, le procédé comporte une étape de transformation du vecteur $\mathbf{a}_{km}$ en un vecteur $\mathbf{b}_{km}$ dont les composantes sont formées à partir des composantes du vecteur $\mathbf{a}_{km}$. En particulier, le procédé construit par exemple le vecteur $\mathbf{b}_{km}$ de dimension (N-1)x1 en choisissant un capteur de référence en n=i :

$$\mathbf{b}_{km} = \begin{bmatrix} \mathbf{a}_{km}(1)/a_{km}(i) \\ \vdots \\ \mathbf{a}_{km}(i-1)/a_{km}(i) \\ \mathbf{a}_{km}(i+1)/a_{km}(i) \\ \vdots \\ \mathbf{a}_{km}(N)/a_{km}(i) \end{bmatrix} = \mathbf{b}(t_k, \mathsf{x}_m, \mathsf{y}_m, \mathsf{z}_m) \tag{9}$$

où $\mathbf{a}_{km}(i)$ est la $i^{ème}$ composante de $\mathbf{a}_{km}$

Les composantes de $\mathbf{b}_{km}$ correspondent dans ce cas aux rapports des composantes du vecteur $\mathbf{a}_{km}$ et du vecteur $\mathbf{a}_{km}(i)$.

Ainsi dans l'exemple de l'équation (6) en fixant $i$=1 on obtient :

$$\mathbf{b}_{km} = \left[ \exp\left( j2\pi \frac{d}{\lambda} \cos(\theta(t_k, x_m, y_m, z_m)) \cos(\Delta(t_k, x_m, y_m, z_m)) \right) \right] \tag{10}$$

$$= \mathbf{a}_{km}(2)/\,\mathbf{a}_{km}(1)$$

Sachant que les vecteurs directeurs $\mathbf{a}_{km}$ sont estimés avec une certaine erreur $\mathbf{e}_{km}$ tel que $\mathbf{a}_{km} = \mathbf{a}(t_k, x_m, y_m, z_m) + \mathbf{e}_{km}$, on peut en déduire qu'il en est de même pour le vecteur transformé $\mathbf{b}_{km}$ de (9).

Etape de maximisation d'un critère de corrélation

Sachant que le vecteur $\mathbf{a}_{km}$ est une fonction de la position $(x_m, y_m, z_m)$ de l'émetteur il en est de même pour le vecteur $\mathbf{b}_{km}$. Le procédé comporte une étape de maximisation d'un critère de corrélation vectorielle normalisé $L_K(x, y, z)$ dans l'espace $(x, y, z)$ de position d'un émetteur où

$$L_K(x, y, z) = \frac{\left| \mathbf{b}_K^{\mathrm{H}} \mathbf{v}_K(x, y, z) \right|^2}{\left( \mathbf{b}_K^{\mathrm{H}} \mathbf{b}_K \right) \left( \mathbf{v}_K(x, y, z)^{\mathrm{H}} \mathbf{v}_K(x, y, z) \right)} \ . \tag{11}$$

Avec

$$\mathbf{b}_K = \begin{bmatrix} \mathbf{b}_{1m} \\ \vdots \\ \mathbf{b}_{Km} \end{bmatrix} = \mathbf{v}_K(\mathsf{x}_m, \mathsf{y}_m, \mathsf{z}_m) + \mathbf{w}_K \ , \quad \mathbf{v}_K(\mathsf{x}, \mathsf{y}, \mathsf{z}) = \begin{bmatrix} \mathbf{b}(t_1, x, y, z) \\ \vdots \\ \mathbf{b}(t_K, x, y, z) \end{bmatrix}$$

et

$$\mathbf{w}_K = \begin{bmatrix} \mathbf{w}_{1m} \\ \vdots \\ \mathbf{w}_{Km} \end{bmatrix}$$

Le vecteur bruit $\mathbf{w_K}$ a pour matrice de covariance $\mathbf{R}=E[\mathbf{w_K}\,\mathbf{w_K}^H]$. En faisant l'hypothèse que la matrice $\mathbf{R}$ est connue, le critère peut être envisagé avec une technique de blanchiment. Dans ces conditions on obtient le critère $L_K'$ (x,y,z) suivant :

$$L_K'(x,y,z)= \frac{\left|\mathbf{b}_K{}^{H}\,\mathbf{R}^{-1}\,\mathbf{v}_K(x,y,z)\right|^2}{\left(\mathbf{b}_K{}^{H}\mathbf{R}^{-1}\mathbf{b}_K\right)\left(\mathbf{v}_K(x,y,z)^{H}\mathbf{R}^{-1}\mathbf{v}_K(x,y,z)\right)} \qquad (12)$$

Avec $\mathbf{R}=E[\mathbf{w_K}\,\mathbf{w_K}^H]$

- Il faut remarquer que les critères des équations (11) et (12) sont égaux lorsque $\mathbf{R}=\sigma^2|$, c'est à dire lorsque les erreurs sont considérées de niveau égal sur tous les capteurs et indépendantes entre capteurs. Le critère $L_K(x,y,z)$ de l'équation (12) est donc valable pour un bruit de modèle $\mathbf{w}_K$ de statistiques blanches.
- Les critères $L_K(x,y,z)$ et $L_K'(x,y,z)$ sont compris entre 0 et 1 et vérifient $L_K(x,y,z)= L_K'(x,y,z)=1$ pour la position $(x_m, y_m, z_m)$ du $m^{\text{ième}}$ émetteur. Cette normalisation permet de fixer un seuil de bonne localisation $\eta$. Ainsi tous les maximums $(x_m,y_m,z_m)$ de $L_K(x,y,z)$ qui vérifient $L_K(x_m,y_m,z_m)> \eta$ sont considérés comme des bonnes localisations. Le seuil peut être fixé en fonction d'une connaissance approchée des statistiques de $\mathbf{w}_K$.
- Les critères $L_K(x,y,z)$ et $L_K'(x,y,z)$ ont l'avantage de pouvoir mettre en oeuvre une technique de localisation en présence d'un réseau de capteurs calibrés dans l'espace $(\theta,\Delta)$. Sachant qu'à l'instant $t_k$ on connaît la relation analytique liant l'incidence $(\theta(t_k,x,y,z), \Delta(t_k,x,y,z))$ de l'émetteur à sa position (x,y,z), on peut alors déduire à partir de l'incidence $(\theta(t_k,x,y,z), \Delta(t_k,x,y,z))$ le vecteur $\mathbf{a}(t_k,x_m,y_m,z_m)= \mathbf{a}(\theta(t_k,x,y,z), A(t_k,x,y,z))$ en réalisant une interpolation de la table de calibration (relative aux antennes calibrées). Remarquons cependant que ce procédé est insensible à un biais en phase (en raison du critère de corrélation vectorielle).
- Ces critères permettent aussi de tenir compte de la phase et de l'amplitude des composantes de $\mathbf{a}(\theta,\Delta)$. La méthode peut donc être envisagée avec des réseaux à antennes colocalisées à diversité de diagramme.

Il faut remarquer que dans un contexte aéroporté la connaissance de l'altitude $h$ de l'avion permet de réduire le calcul du critère dans l'espace de recherche (x,y) en posant $z=h$. Dans l'exemple des équations (6) et (10) le vecteur $\mathbf{v}_K(x,y,z)$ s'écrit de la manière suivante :

$$\mathbf{v}_K(x,y,z) = \begin{bmatrix} \exp\left(j2\pi\frac{d}{\lambda}\cos(\theta(t_1,x,y,z))\cos(\Delta(t_1,x,y,z))\right) \\ \vdots \\ \exp\left(j2\pi\frac{d}{\lambda}\cos(\theta(t_K,x,y,z))\cos(\Delta(t_K,x,y,z))\right) \end{bmatrix} \qquad (13)$$

Dans ce procédé il est possible d'envisager d'initialiser l'algorithme à $K=K_0$ puis ensuite de calculer de façon récursive le critère $L_K(x,y,z)$. Dans ces conditions $L_K(x,y,z)$ se calcule récursivement de la façon suivante :

$$L_{K+1}(x,y,z)= \frac{\left|\alpha_{K+1}(x,y,z)\right|^2}{\beta_{K+1}\,\gamma_{K+1}(x,y,z)} \qquad (14)$$

où

$$\alpha_{K+1}(x,y,z)= \alpha_K(x,y,z) + \mathbf{b}_{K+1\,m}{}^{H}\,\mathbf{b}(t_{K+1},x,y,z)$$

$$\gamma_{K+1}(x,y,z)= \gamma_K(x,y,z) + \mathbf{b}(t_{K+1},x,y,z)^{H}\,\mathbf{b}(t_{K+1},x,y,z)$$

$$\beta_{K+1}=\beta_K + \mathbf{b}_{K+1\,m}{}^{H}\,\mathbf{b}_{K+1\,m}$$

Les coefficients $\alpha_{K+1}(x,y,z)= \alpha_K(x,y,z)$ $\gamma_{K+1}(x,y,z)= \gamma_K(x,y,z)$, $\beta_{K+1}=\beta_K$ sont des spectres intermédiaires permettant de calculer $L_{K+1}(x,y,z)$.

Lorsque les vecteurs $\mathbf{b}(t_{K+1},x,y,z)$ et $\mathbf{b}_{km}$ sont de normes constantes égale à p la relation de récurrence de l'équation (14) devient :

$$L_{K+1}(x,y,z)= \frac{\left|\alpha_{K+1}(x,y,z)\right|^2}{\beta^2\,(K+1)^2} \qquad (15)$$

où
$\alpha_{K+1}(x,y,z)= \alpha_K(x,y,z) + \mathbf{b}_{K+1\,m}{}^{H}\,\mathbf{b}(t_{K+1},x,y,z)$

Le procédé est décrit jusqu'ici en supposant que les émetteurs ont des positions fixes. Il peut facilement s'étendre au cas de cibles mobiles de vecteur vitesse $(v_{xm},v_{ym},v_{zm})$ pour lesquelles on dispose d'un modèle d'évolution. Dans ces conditions l'incidence du $m^{\text{ième}}$ émetteur se paramètrise de la manière suivante :

$$\theta_{km}=\theta(t_k,\ x_m\text{-}v_{xm}\,t_k\,,y_m\text{-}v_{ym}\,t_k,\ z_m\text{-}v_{zm}\,t_k) \qquad (16)$$

et

$$\Delta_{km}=\Delta(\ t_k,\ x_m\text{-}v_{xm}\,t_k\,,y_m\text{-}v_{ym}\,t_k,\ z_m\text{-}v_{zm}\,t_k)$$

où $(x_m,y_m,z_m)$ est la position de l'émetteur à l'instant $t_0$ et $(v_{xm},v_{ym},v_{zm})$ les composantes de la vitesse de l'émetteur à l'instant $t_0$. Dans ces conditions le vecteur $\mathbf{b}_{km}$ de l'équation (9) est paramétré par $(x_m,y_m,z_m)$ et $(v_{xm},v_{ym},v_{zm})$ de la manière suivante :

$$\mathbf{b}_{km} = \mathbf{b}(t_k,x_m,y_m,z_m,v_{xm},v_{ym},v_{zm},)+ \mathbf{w}_{km} \qquad (17)$$

De manière naturelle les critères de localisation $L_K$ et $L_K{}'$ des équations (11) et (12) ne sont plus paramétrés seulement par $(x,y,z)$ mais aussi par $(v_x,v_y,v_z)$. Le procédé consiste donc à maximiser le critère $L_K(x,y,z,\ v_x,v_y,v_z)$ en fonctions des 6 paramètres $(x,y,z,\ v_x,v_y,v_z)$.

Le procédé peut s'appliquer à un très grand nombre de mesures. Dans ce cas, le procédé comporte une étape de réduction de la complexité numérique de calcul (qui est fonction du nombre de mesures) en diminuant K. Le procédé prévoit d'effectuer sur les mesures élémentaires les traitements suivants :

- décimation des instants $t_k$, en éliminant les instants voisins pour lesquels l'évolution de la courbe $\beta_m(t_k)$ n'est pas significative,
- filtrage (lissage des mesures qui sont les vecteurs directeurs) et sous échantillonnage,
- les mesures sont ensuite fusionnées sur une durée définie (extraction par association de vecteur directeur pour produire une mesure de synthèse).

## Récapitulation des étapes du procédé

Le procédé de localisation de plusieurs émetteurs utilisant $K$ instants $t_k$ peut se résumer par les étapes suivantes :

**Etape n°1** : Identification des vecteurs $\mathbf{a}_{km}$ pour ($1\leq m\leq M$) aux $K$ instants $t_k$ en appliquant par exemple une technique de séparation de sources et d'identification de sources comme décrit dans les références [2] [3].

**Etape n°2** : Association des vecteurs $\mathbf{a}_{1m}$ jusqu'à $\mathbf{a}_{Km}$ obtenus aux instants respectifs $t_1$... $t_K$ associé au $m^{\text{ième}}$ émetteur pour $1\leq m\leq M$ en appliquant les étapes ASE-1 jusqu'à ASE-5 décrit ci-dessus.

**Etape n°3** : Initialisation du processus à $m=1$

**Etape n°4** : Transformation des $K$ vecteurs $\mathbf{a}_{km}$ en des vecteurs $\mathbf{b}_{Km}$ comme le suggère l'équation (9).

**Etape n°5** : Calcul et maximisation du critère $L_K(x,y,z)$ de l'équation (11) pour obtenir la position $(x_m,y_m,z_m)$ du $m^{\text{ième}}$ émetteur.

**Etape n°6 :** Incrémentation $m \leftarrow m+1$ et si $m<M$ retour à l'étape n°3 Afin d'affiner l'estimation de la position $(x_m,y_m,y_m)$ des émetteurs les étapes du procédé peuvent être réalisées de façon itérative de la manière suivante :

**Etape n°7 :** Identification des vecteurs $\mathbf{b}_i$ pour *($1\leq i\leq M$)* à l'instants $t_{K+1}$ en appliquant par exemple une technique de séparation et d'identification de sources comme décrit dans les références [2] [3].

**Etape n°8 :** Pour *$1\leq m\leq M$* détermination des indices *$i(m)$* en appliquant l'équation (4) et en utilisant le vecteur $\mathbf{a}_{km}$ et les vecteurs $\mathbf{b}_i$ pour *($1\leq i\leq M$).*

**Etape n°9 :** Pour $1\leq m\leq M$ est effectué l'opération $\mathbf{a}_{K+1\,m}= \mathbf{b}_{i(m)}$

**Etape n°10 :** Pour $1\leq m\leq M$ calcul du critère $L_{K+1}(x,y,z)$ de façon itérative en utilisant les équations (14) et (15) et minimisation de $L_{K+1}(x,y,z)$ pour obtenir la position $(x_m,y_m,z_m)$ du $m^{\text{ième}}$ émetteur.

**Etape n°11 :** Si l'on décide de continuer pour être plus précis et moins ambiguë le procédé retourne à l'étape n°7.

## Exemple de mise en oeuvre du procédé

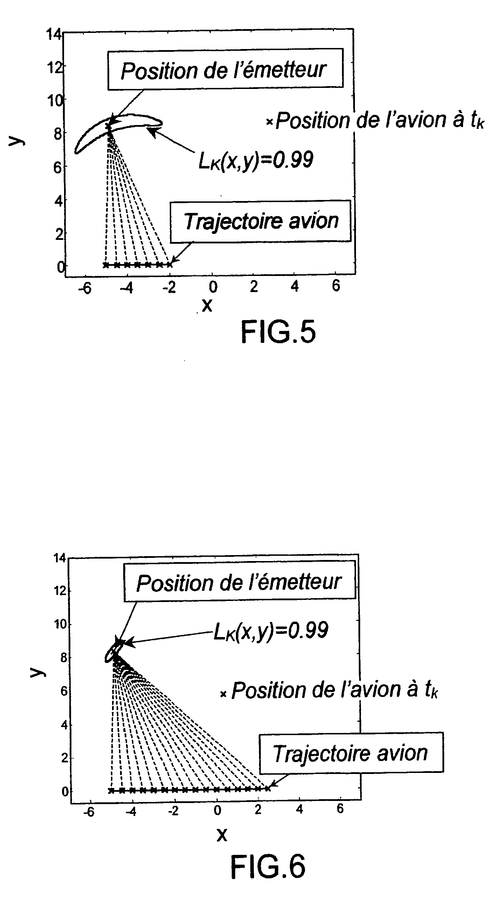

Les simulations ont été réalisées avec un réseau de $N=2$ capteurs alignés dans l'axe du porteur avec $d/\lambda=3$. Comme $d/\lambda=3$ une méthode effectuant une goniométrie aux instants $t_k$ serait complètement ambiguë et ne permettrait pas de faire par la suite des triangulations pour effectuer la localisation de l'émetteur. Sur les figures 5, 6 et 7 correspondant aux critères de localisation pour K=3, 7 et 16 est tracé le pseudo-spectre $L_K(x,y)$ a maximiser permettant de déterminer la position de l'émetteur dans l'espace (x,y). Sachant que si l'émetteur se situe en $(x_0,y_0)$ alors $L_K(x_0,y_0)=1$, on en déduit que les courbes iso-niveaux $L_K(x,y)=0.99$ caractérisent la largeur du lobe principale. Remarquant que la précision de localisation dépend de la largeur de ce lobe, on en déduit d'après les figures 5, 6 et 7 que plus $K$ est important et meilleur sera la précision de localisation.

Références

[1] RO.SCHMIDT. A signal subspace approach to multiple emitter location and spectral estimation, November 1981

[2] J.F. CARDOSO, A. SOULOUMIAC, Blind beamforming for non-gaussian signals, IEE Proceedings-F, Vol.140, N°6, pp. 362-370, Dec. 1993.

[3] P. COMON, Independent Component Analysis, a new concept?,Signal Processing, Elsevier, avril 1994, vol 36, n°3, pp 287-314.

**Revendications**

1.  Procédé de localisation d'un ou de plusieurs sources, la ou lesdites sources étant en mouvement par rapport à un réseau de capteurs, le procédé comportant une étape de séparation des sources afin d'identifier les vecteurs directeurs associés à la réponse des capteurs à une source d'incidence donnée, les angles d'incidence étant variables et dépendants de la position du réseau de capteurs et des desdites sources comprenant les étapes suivantes :

    • associer les vecteurs directeurs $\mathbf{a}_{1m}...\mathbf{a}_{Km}$ obtenus pour le $m^{\text{ième}}$ émetteur et respectivement pour les instants $t_1...t_K$, sur une durée Dt afin de séparer les différents émetteurs à chaque instant $t_K$
    • localiser la position $(x_m, y_m, z_m)$ du $m^{\text{ième}}$ émetteur à partir des vecteurs $\mathbf{a}_{1m}...\mathbf{a}_{Km}$ associés à un même émetteur et issus des différents instants $t_K$,

    ledit procédé étant **caractérisé en ce que** l'étape de localisation comporte au moins l'étape suivante:

    maximiser un critère de corrélation vectorielle normalisé $L_k(x, y, z)$ dans l'espace $(x, y, z)$ de position d'un émetteur avec

    $$L_K(x,y,z)=\frac{\left|\mathbf{b}_K^{H}\mathbf{v}_K(x,y,z)\right|^2}{\left(\mathbf{b}_K^{H}\mathbf{b}_K\right)\left(\mathbf{v}_K(x,y,z)^H\mathbf{v}_K(x,y,z)\right)}$$

    avec

    $$\mathbf{b}_K = \begin{bmatrix}\mathbf{b}_{1m}\\ \vdots \\ \mathbf{b}_{Km}\end{bmatrix} = \mathbf{v}_K(x_m,y_m,z_m) + \mathbf{w}_K \quad , \quad \mathbf{v}_K(x,y,z) = \begin{bmatrix}\mathbf{b}(t_1, x, y, z)\\ \vdots \\ \mathbf{b}(t_K, x, y, z)\end{bmatrix}$$

    et

    $$\mathbf{w}_K = \begin{bmatrix}\mathbf{w}_{1m}\\ \vdots \\ \mathbf{w}_{Km}\end{bmatrix}$$

    où $\mathbf{w}_k$ est le vecteur bruit pour toutes les positions $(x, y, z)$ d'un émetteur.

2.  Procédé selon la revendication 1 **caractérisé en ce que** le vecteur $\mathbf{b}_K$ comporte un vecteur représentatif du bruit dont les composantes sont fonctions des composantes des vecteurs $\mathbf{a}_{1m} ... \mathbf{a}_{Km}$.

3.  Procédé selon la revendication 1 **caractérisé en ce qu'**il comporte une étape où l'on détermine la matrice de covariance $\mathbf{R}=E[\mathbf{w}_K \mathbf{w}_K^H]$ du vecteur bruit et **en ce que** l'on maximise le critère

    $$L_K'(x,y,z)=\frac{\left|\mathbf{b}_K^{H}\mathbf{R}^{-1}\mathbf{v}_K(x,y,z)\right|^2}{\left(\mathbf{b}_K^{H}\mathbf{R}^{-1}\mathbf{b}_K\right)\left(\mathbf{v}_K(x,y,z)^H\mathbf{R}^{-1}\mathbf{v}_K(x,y,z)\right)}$$

4.  Procédé selon la revendication 3 **caractérisé en ce que** l'évaluation du critère $L_K(x,y,z)$ et/ou du critère $L_K'(x,y,z)$

est récursive.

**5.** Procédé selon l'une des revendications 1 à 4 **caractérisé en ce qu'**il comporte une étape de comparaison des maximums avec une valeur seuil.

**6.** Procédé selon l'une des revendications 1 à 5 **caractérisé en ce que** la valeur de $K$ est initialement fixée à $K_0$.

**7.** Procédé selon l'une des revendications 1 à 6 **caractérisé en ce que** les émetteurs à localiser sont mobiles et **en ce que** le vecteur considéré est paramétré par la position de l'émetteur à localiser et le vecteur vitesse.

**Claims**

**1.** A method for localising one or more sources, said one or more sources moving relative to an array of sensors, the method comprising a step of separating the sources so as to identify the direction vectors associated with the response of the sensors to a source with a given incidence, the angles of incidence being variable and dependent on the position of the array of sensors and said sources comprising the following steps:

• associating the direction vectors $a_{1m}...a_{Km}$ obtained for the $m^{th}$ transmitter and respectively for the instants $t_1...t_K$ over a duration Dt so as to separate the various transmitters at each instant $t_K$;
• localising the position $(x_m, y_m, z_m)$ of the $m^{th}$ transmitter on the basis of the vectors $a_{1m}...a_{Km}$ that are associate with the same transmitter and coming from different instants $t_K$;

said method being **characterised in that** the localizing step comprises at least the following step:

maximising a normalised vector correlation criterion $L_k(x, y, z)$ in the position space (x, y, z) of a transmitter with

$$L_K(x,y,z)=\frac{\left|b_K{}^H v_K(x,y,z)\right|^2}{\left(b_K{}^H b_K\right)\left(v_K(x,y,z)^H v_K(x,y,z)\right)}$$

with

$$b_K = \begin{bmatrix} b_{1m} \\ \vdots \\ b_{Km} \end{bmatrix} = v_K(x_m,y_m,z_m) + w_K \quad , \quad v_K(x,y,z) = \begin{bmatrix} b(t_1,x,y,z) \\ \vdots \\ b(t_K,x,y,z) \end{bmatrix}$$

and

$$w_K = \begin{bmatrix} w_{1m} \\ \vdots \\ w_{Km} \end{bmatrix}$$

where $\mathbf{w}_K$ is the noise vector for all of the positions (x, y, z) of a transmitter.

**2.** The method according to claim 1, **characterised in that** the vector $b_K$ comprises a vector that represents the components of which are functions of the components of the vectors $a_{1m}.. a_{Km}$.

**3.** The method according to claim 1, **characterised in that** it comprises a step in which the covariance matrix R=E $[\mathbf{W}_K \mathbf{W}_K{}^H]$ of the noise vector is determined and **in that** the following criterion is maximised:

$$L_K'(x,y,z)=\frac{\left| b_K^{\;H}\,R^{-1}\,v_K(x,y,z)\right|^2}{\left(b_K^{\;H}R^{-1}b_K\right)\left(v_K(x,y,z)^H\,R^{-1}\,v_K(x,y,z)\right)}$$

4. The method according to claim 3, **characterised in that** the assessment of the criterion $L_K(x, y, z)$ and/or of the criterion $L_K'(x, y, z)$ is recursive.

5. The method according to any one of claims 1 to 4, **characterised in that** it comprises a step of comparing maximum values with a threshold value.

6. The method according to any one of claims 1 to 5, **characterised in that** the value of $K$ is initially fixed at $K_0$.

7. The method according to any one of claims 1 to 6, **characterised in that** the transmitters to be localised are mobile and **in that** the considered vector is configured by the position of the transmitter to be localised and the speed vector.

**Patentansprüche**

1. Verfahren zum Orten von einer oder mehreren Quellen, wobei sich die Quelle(n) in Bezug auf ein Netzwerk von Sensoren bewegt/-en, wobei das Verfahren einen Schritt des Trennens der Quellen beinhaltet, um die Richtungsvektoren in Verbindung mit der Reaktion der Sensoren auf eine gegebene Einfallsquelle zu identifizieren, wobei die Einfallswinkel variabel und von der Position des Netzwerks von Sensoren abhängig sind und wobei die Quellen folgenden Schritte beinhalten:

• Assoziieren der für den $m^{ten}$ Sender und jeweils für die Zeitpunkte $t_1...t_K$ erhaltenen Richtungsvektoren $a_{1m}...a_{Km}$ über eine Dauer Dt, um die verschiedenen Sender zu jedem Zeitpunkt $t_K$ zu trennen;
• Orten der Postition $(x_m, y_m, z_m)$ des $m^{ten}$ Senders auf der Basis der Vektoren $a_1m...a_{Km}$, die mit demselben Sender assoziiert sind und von unterschiedlichen Zeitpunkten $t_K$ kommen;

wobei das Verfahren **dadurch gekennzeichnet ist, dass** der Ortungsschritt wenigstens den folgenden Schritt beinhaltet:

Maximieren eines normalisierten Vektorkorrelationskriteriums $L_k(x, y, z)$ im Positionsraum $(x, y, z)$ eines Senders mit:

$$L_K(x,y,z)=\frac{\left| b_K^{\;H}\,v_K(x,y,z)\right|^2}{\left(b_K^{\;H}b_K\right)\left(v_K(x,y,z)^H\,v_K(x,y,z)\right)}$$

wobei

$$b_K = \begin{bmatrix} b_{1m} \\ \vdots \\ b_{Km} \end{bmatrix} = v_K(x_m,y_m,z_m) + w_K \;,\quad v_K(x,y,z) = \begin{bmatrix} b(t_1,x,y,z) \\ \vdots \\ b(t_K,x,y,z) \end{bmatrix}$$

und

$$w_K = \begin{bmatrix} w_{1m} \\ \vdots \\ w_{Km} \end{bmatrix}$$

wobei $w_K$ der Rauschvektor für alle Positionen $(x, y, z)$ eines Senders ist.

**2.** Verfahren nach Aspruch 1, **dadurch gekennzeichnet**, der Vektor $b_K$ einen Vektor umfasst, der Rauschen repräsentiert, dessen Komponenten von den komponenten der Vektoren $a_{1m}..a_{Km}$ abhängig sind.

**3.** Verfähren nach Anspruch 1, **dadurch gekennzeichnet, dass** es einen Schritt des Ermittelns der Kovarianzmatrix $R=E[w_K w_K^H]$ des Rauschvektors beinhaltet, und dadurch, dass das folgende Kriterium maximiert wird:

$$L_K'(x,y,z) = \frac{\left| b_K^H\, R^{-1}\, v_K(x,y,z) \right|^2}{\left( b_K^H R^{-1} b_K \right)\left( v_K(x,y,z)^H\, R^{-1}\, v_K(x,y,z) \right)}.$$

**4.** Verfahren Anspruch 3, **dadurch gekennzeichnet, dass** die Beurteilung des Käteäums $L_K(x, y, z)$ und/oder des Kriteriums $L_K'(x, y, z)$ rekursiv ist.

**5.** Verfahren nach einem der Ansprüche 1 bis 4, **dadurch gekennzeichnet, dass** es einen Schritt des Vergleichens der Maximalwerte mit einem Schwellenwert beinhaltet.

**6.** Verfahren nach einem der Ansprüche 1 bis 5, **dadurch gekennzeichnet, dass** der Wert von $K$ anfänglich auf $K_0$ festgelegt wird.

**7.** Verfahren nach einem der Ansprüche! 1 bis 6, **dadurch gekennzeichnet, dass** die zu ortenden Sender mobil sind, und dadurch, dass der betrachtete Vektor von der Postition des zu ortenden Senders und dem Geschwindigkeitsvektor parametriert wird.

Avion à l'instant $t_k$ de position $(x_k, y_k, z_k)$

Avion à l'instant $t_{k+1}$ de position $(x_{k+1}, y_{k+1}, z_{k+1})$

Trajectoire

$\theta(t_{k+1}, M_0)$

$\theta(t_k, M_0)$

$\Delta(t_{k+1}, M_0)$

$\Delta(t_k, M_0)$

$z$

$y$

$y_0$

Emetteur de position $M_0 = (x_0, y_0, z_0)$

$x_0$

$x$

FIG.1

2   1

$\theta(t, x, y, z)$

Plan des antennes

$\Delta(t, x, y, z)$

$k(\theta(t, x, y, z), \Delta(t, x, y, z))$

FIG.2

$x(t)$ : signaux capteurs

$\Delta t_i$

$t$

$t_1$ $t_2$ $t_3$ $t_K$

| SE & EP | SE & EP | SE & EP | SE & EP |

Association des paramètres de chaque émetteur

$Par_1$ $Par_M$

LOC — — — — — LOC

$(x_1, y_1)$ $(x_M, y_M)$

## FIG.3

Position de l'émetteur

$^x$ Position de l'avion à $t_k$

$L_K(x,y) = 0.99$

Trajectoire avion

y

x

## FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RO.SCHMIDT.** *A signal subspace approach to multiple emitter location and spectral estimation,* Novembre 1981
- **J.F. CARDOSO ; A. SOULOUMIAC.** Blind beamforming for non-gaussian signals. *IEE Proceedings-F,* Décembre 1993, vol. 140 (6), 362-370

- Independent Component Analysis, a new concept?. **P. COMON.** Signal Processing. Elsevier, Avril 1994, vol. 36, 287-314